# EUROPEAN PATENT APPLICATION

(11) **EP 2 418 859 A2**
(43) Date of publication of application: **15.02.2012**
(21) Application number: 11153833.6
(22) Date of filing: 09.02.2011
(51) Int. Cl.: H04N 13/00

(54) **Method for controlling depth of image and mobile terminal using the method**

(30) Priority: 11.08.2010 KR 20100077447
(71) Applicant: LG Electronics, Seoul, 150-721 (KR)
(72) Inventor: Kim, Jonghwan, Incheon (KR)
(74) Representative: Cabinet Plasseraud

(57) **Abstract**

A method for controlling depth of an image includes identifying a target to be displayed in a three-dimensional manner in a three dimensional manner, determining a size of the identified target, calculating a depth of the target in correspondence with the determined size, and displaying the target in the three-dimensional manner according to the calculated depth on the screen.

## Description

### BACKGROUND OF THE INVENTION

### Field of the Invention

The present disclosure relates to an image processing, and particularly, to a method for processing a two-dimensional or three-dimensional image and a mobile terminal using the same.

### Description of Related Art

In general, terminals may be divided into a mobile or portable terminal and a stationary terminal according to whether or not terminals are movable. In addition, mobile terminals may be divided into a handheld terminal and a vehicle mount terminal according to whether or not users can directly carry it around.

As the functions of terminals are becoming more diverse, terminals can support more complicated functions such as capturing images or video, reproducing music or video files, playing games, receiving broadcast signals, and the like. By comprehensively and collectively implementing such functions, mobile terminals are embodied in the form of a multimedia player or device. In order to support and increase functions of the terminals, improvement of structural part and/or software part of terminals may be considered.

In general, terminals are continuously being evolved to be able to display three-dimensional images allowing depth perception or stereovision, beyond the level of displaying two-dimensional images. Such three-dimensional images make users possess more realistic user interfaces or contents.

However, the related art terminal capable of displaying such three-dimensional images merely indiscriminately displays user interfaces or contents in a three-dimensional manner, but is not able to display the user interfaces in a manner of helping users recognize the user interfaces more conveniently or display contents in a more attractive manner to make the users enjoy the contents.

### SUMMARY OF THE INVENTION

Therefore, an aspect of the detailed description is to provide a method for controlling image depth by enhancing recognition level on images, graphic objects, partial screens and the like displayed in a three-dimensional manner or providing visibly interesting effects, and a mobile terminal using the same.

To achieve these and other advantages and in accordance with the purpose of the present disclosure, as embodied and broadly described herein, there is provided a method for controlling depth of an image including, identifying a target to be displayed on a screen in a three-dimensional manner, determining a size of the identified target, deciding depth of the target in correspondence with the determined size, and displaying the target in the three-dimensional manner according to the decided depth.

In accordance with one aspect of the detailed description, there is provided a mobile terminal including a controller identifying a target to be displayed on a screen in a three-dimensional manner, determining a size of the identified target and deciding depth of the target in correspondence with the determined size, and a display unit displaying the target in the three-dimensional manner according to the decided depth.

In accordance with a method for controlling depth of an image and a mobile terminal using the same according to at least one exemplary embodiment, user interfaces or contents using three-dimensional stereoscopic image can be displayed by adjusting depth thereof in correspondence with a size of image, graphic object, partial screen and the like, displayed in a three-dimensional manner, instead of displaying the same uniformly with the same depth, thereby enhancing recognition level of the three-dimensionally displayed object or providing a visually attractive effect

The foregoing and other objects, features, aspects and advantages of the present disclosure will become more apparent from the following detailed description of the present disclosure when taken in conjunction with the accompanying drawings

### BRIEF DESCRIPTION OF THE DRAWINGS

The present invention will become more fully understood from the detailed description given hereinbelow and the accompanying drawings, which are given by illustration only, and thus are not limitative of the present invention and wherein:

FIG. 1 is a schematic block diagram of a mobile terminal according to an exemplary embodiment of the present invention;

FIG. 2 is an exemplary view showing that the mobile terminal in accordance with the one exemplary embodiment decides depth for each pixel of a three-dimensional image in correspondence with a size of the three-dimensional image;

FIG. 3 is an exemplary view showing that the mobile terminal displays each three-dimensional image, in a gallery menu including only the three-dimensional images, by controlling depth thereof;

FIG. 4 is an exemplary view showing that the mobile terminal displays each image, in a gallery menu including three-dimensional images and two-dimensional images, by controlling a depth thereof;

FIG. 5 is an exemplary view showing that the mobile terminal displays a three-dimensional image or a two-dimensional image by controlling depth thereof in response to a size variation of the image;

FIG. 6 is a first exemplary view showing that the mobile terminal displays each three-dimensional graphic object by controlling depth thereof according to the size thereof;

FIG. 7 is a second exemplary view showing that the mobile terminal displays each three-dimensional graphic object by controlling depth thereof according to the size thereof;

FIG. 8 is an exemplary view showing that the mobile terminal decides depth for each pixel of a three-dimensional partial screen in correspondence with the size of the three-dimensional partial screen;

FIG. 9 is an exemplary view showing that the mobile terminal displays a three-dimensional graphic object, on which a pointer or cursor is present or which is displayed at the foreground, with depth;

FIG. 10 is an exemplary view showing that the mobile terminal displays a three-dimensional image displayed at the foreground with depth;

FIG. 11 is an exemplary view showing that the mobile terminal displays a three-dimensional graphic object, on which a user applies a touch input or a proximity touch, with depth;

FIG. 12 is an exemplary view showing that the mobile terminal displays a three-dimensional graphic object selected by a user with depth;

FIG. 13 is an exemplary view showing that the mobile terminal displays a three-dimensional user interface component selectable by a user with depth; and

FIG. 14 is a flowchart showing a method for controlling depth of an image in accordance with one exemplary embodiment.

### DETAILED DESCRIPTION OF THE INVENTION

Embodiments of the present disclosure will be described below in detail with reference to the accompanying drawings, where those components are rendered the same reference number that are the same or are in correspondence, regardless of the figure number, and redundant explanations are omitted. In describing the present disclosure, if a detailed explanation for a related known function or construction is considered to unnecessarily divert the gist of the present disclosure, such explanation has been omitted but would be understood by those skilled in the art. In the following description, usage of suffixes such as 'module', 'part' or 'unit' used for referring to elements is given merely to facilitate explanation of the present disclosure, without having any significant meaning by itself. In describing the present disclosure, if a detailed explanation for a related known function or construction is considered to unnecessarily divert the gist of the present disclosure, such explanation has been omitted but would be understood by those skilled in the art. The accompanying drawings of the present disclosure aim to facilitate understanding of the present disclosure and should not be construed as limited to the accompanying drawings.

Overall configuration of a mobile terminal

The mobile terminal associated with the present disclosure may include mobile phones, smart phones, notebook computers, digital broadcast receivers, PDAs (Personal Digital Assistants), PMPs (Portable Multimedia Player), navigation devices, and the like. It would be understood by a person in the art that the configuration according to the embodiments of the present disclosure can be also applicable to the fixed types of terminals such as digital TVs, desk top computers, or the like, except for any elements especially configured for a mobile purpose.

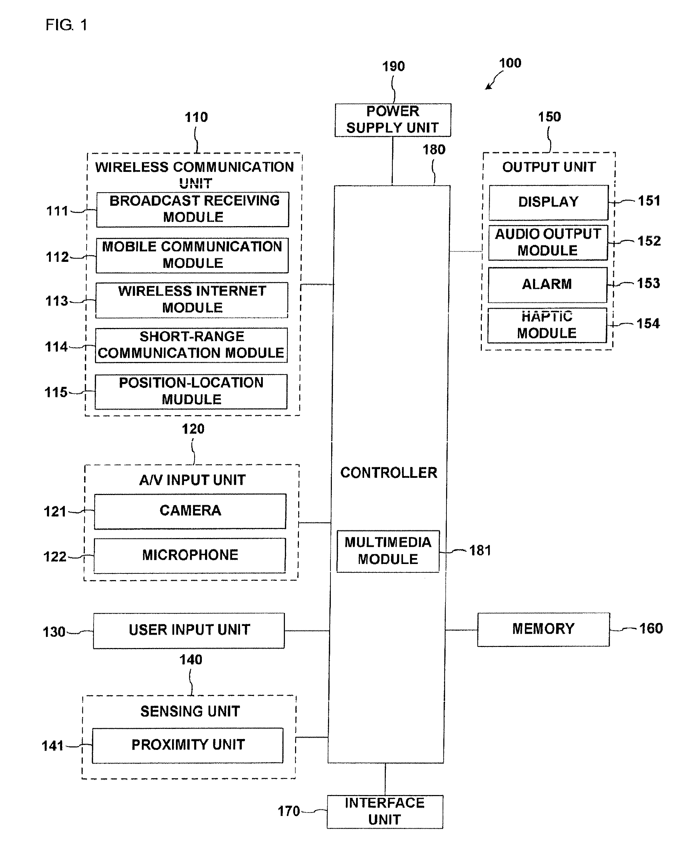

FIG. 1 is a schematic block diagram of a mobile terminal according to an embodiment of the present disclosure.

The mobile terminal 100 may include a wireless communication unit 110, an A/V (Audio/Video) input unit 120, a user input unit 130, a sensing unit 140, an output unit 150, a memory 160, an interface unit 170, a controller 180, and a power supply unit 190, and the like. FIG. 1 shows the mobile terminal as having various components, but it should be understood that implementing all of the illustrated components is not a requirement. Greater or fewer components may alternatively be implemented.

The elements of the mobile terminal will be described in detail as follows.

The wireless communication unit 110 typically includes one or more components allowing radio communication between the mobile terminal 100 and a wireless communication system or a network in which the mobile terminal is located. For example, the wireless communication unit 110 may include at least one of a broadcast receiving module 111, a mobile communication module 112, a wireless Internet module 113, a short-range communication module 114, and a position-location module 115.

The broadcast receiving module 111 receives broadcast signals and/or broadcast associated information from an external broadcast management server (or other network entity) via a broadcast channel. The broadcast associated information may refer to information associated with a broadcast channel, a broadcast program or a broadcast service provider. The broadcast associated information may also be provided via a mobile communication network and, in this case, the broadcast associated information may be received by the mobile communication module 112. Broadcast signals and/or broadcast-associated information received via the broadcast receiving module 111 may be stored in the memory 160 (or anther type of storage medium).

The mobile communication module 112 transmits and/or receives radio signals to and/or from at least one of a base station (e.g., access point, Node B, and the like), an external terminal (e.g., other user devices) and a server (or other network entities). Such radio signals may include a voice call signal, a video call signal or various types of data according to text and/or multimedia message transmission and/or reception.

The wireless Internet module 113 supports wireless Internet access for the mobile terminal. This module may be internally or externally coupled to the terminal. The wireless Internet access technique implemented may include a WLAN (Wireless LAN) (Wi-Fi), Wibro (Wireless broadband), Wimax (World Interoperability for Microwave Access), HSDPA (High Speed Downlink Packet Access), LTE (Long Term Evolution), LTE-A (Long Term Evolution Advanced) or the like.

The short-range communication module 114 is a module for supporting short range communications. Some examples of short-range communication technology include BLUETOOTH, Radio Frequency IDentification (RFID), Infrared Data Association (IrDA), Ultra-WideBand (UWB), ZIGBEE, and the like.

The position-location module 115 is a module for checking or acquiring a location (or position) of the mobile terminal. A typical example of the position-location module is a GPS (Global Positioning System).

With reference to FIG. 1, the AN input unit 120 receives an audio or image signal. The AN input unit 120 may include a camera 121 (or other image capture device) or a microphone 122 (or other sound pick-up device). The camera 121 processes image frames of still pictures or video obtained by an image capture device in a video capturing mode or an image capturing mode. The processed image frames may be displayed on a display unit 151 (or other visual output device).

The image frames processed by the camera 121 may be stored in the memory 160 (or other storage medium) or transmitted via the wireless communication unit 110. Two or more cameras 121 may be provided according to the configuration of the mobile terminal.

The microphone 122 may receive sounds (audible data) via a microphone (or the like) in a phone call mode, a recording mode, a voice recognition mode, and the like, and can process such sounds into audio data. The processed audio (voice) data may be converted for output into a format transmittable to a mobile communication base station (or other network entity) via the mobile communication module 112 in case of the phone call mode. The microphone 122 may implement various types of noise canceling (or suppression) algorithms to cancel (or suppress) noise or interference generated in the course of receiving and transmitting audio signals.

The user input unit 130 (or other user input device) may generate input data from commands entered by a user to control various operations of the mobile terminal. The user input unit 130 may include a keypad, a dome switch, a touch pad (e.g., a touch sensitive member that detects changes in resistance, pressure, capacitance, and the like, due to being contacted), a jog wheel, a jog switch, and the like.

The sensing unit 140 (or other detection means) detects a current status (or state) of the mobile terminal 100 such as an opened or closed state of the mobile terminal 100, a location of the mobile terminal 100, the presence or absence of user contact with the mobile terminal 100 (i.e., touch inputs), the orientation of the mobile terminal 100, an acceleration or deceleration movement and direction of the mobile terminal 100, and the like, and generates commands or signals for controlling the operation of the mobile terminal 100. For example, when the mobile terminal 100 is implemented as a slide type mobile phone, the sensing unit 140 may sense whether the slide phone is opened or closed. In addition, the sensing unit 140 can detect whether or not the power supply unit 190 supplies power or whether or not the interface unit 170 is coupled with an external device. The sensing unit 140 may include a proximity unit 141.

The output unit 150 is configured to provide outputs in a visual, audible, and/or tactile manner (e.g., audio signal, image signal, alarm signal, vibration signal, etc.). The output unit 150 may include the display unit 151, an audio output module 152, an alarm unit 153, a haptic module 154, and the like.

The display unit 151 may display (output) information processed in the mobile terminal 100. For example, when the mobile terminal 100 is in a phone call mode, the display unit 151 may display a User Interface (Ul) or a Graphic User Interface (GUI) associated with a call or other communication (such as text messaging, multimedia file downloading, and the like.). When the mobile terminal 100 is in a video call mode or image capturing mode, the display unit 151 may display a captured image and/or received image, a Ul or GUI that shows videos or images and functions related thereto, and the like.

The display unit 151 may include at least one of a Liquid Crystal Display (LCD), a Thin Film Transistor-LCD (TFT-LCD), an Organic Light Emitting Diode (OLED) display, a flexible display, a three-dimensional (3D) display, an e-ink display, or the like.

Some of them may be configured to be transparent or light-transmissive to allow viewing of the exterior, which may be called transparent displays. A typical transparent display may be, for example, a TOLED (Transparent Organic Light Emitting Diode) display, or the like. Through such configuration, the user can view an object positioned at the rear side of the terminal body through the region occupied by the display unit 151 of the terminal body.

The mobile terminal 100 may include two or more display units (or other display means) according to its particular desired embodiment. For example, a plurality of display units may be separately or integrally disposed on one surface of the mobile terminal, or may be separately disposed on mutually different surfaces.

Meanwhile, when the display unit 151 and a sensor (referred to as a 'touch sensor', hereinafter) for detecting a touch operation are overlaid in a layered manner to form a touch screen, the display unit 151 may function as both an input device and an output device. The touch sensor may have a form of a touch film, a touch sheet, a touch pad, and the like.

The touch sensor may convert pressure applied to a particular portion of the display unit 151 or a change in the capacitance or the like generated at a particular portion of the display unit 151 into an electrical input signal. The touch sensor may detect the pressure when a touch is applied, as well as the touched position and area.

When there is a touch input with respect to the touch sensor, a corresponding signal (signals) are transmitted to a touch controller. The touch controller processes the signals and transmits corresponding data to the controller 180. Accordingly, the controller 180 may recognize which portion of the display unit 151 has been touched.

With reference to FIG. 1, a proximity unit 141 may be disposed within or near the touch screen. The proximity unit 141 is a sensor for detecting the presence or absence of an object relative to a certain detection surface or an object that exists nearby by using the force of electromagnetism or infrared rays without a physical contact. Thus, the proximity unit 141 has a considerably longer life span compared with a contact type sensor, and it can be utilized for various purposes.

Examples of the proximity unit 141 may include a transmission type photoelectric sensor, a direct reflection type photoelectric sensor, a mirror-reflection type photo sensor, an RF oscillation type proximity sensor, a capacitance type proximity sensor, a magnetic proximity sensor, an infrared proximity sensor, and the like. In case where the touch screen is the capacitance type, proximity of the pointer is detected by a change in electric field according to the proximity of the pointer. In this case, the touch screen (touch sensor) may be classified as a proximity unit.

The audio output module 152 may convert and output sound audio data received from the wireless communication unit 110 or stored in the memory 160 in a call signal reception mode, a call mode, a record mode, a voice recognition mode, a broadcast reception mode, and the like. Also, the audio output module 152 may provide audible outputs related to a particular function performed by the mobile terminal 100 (e.g., a call signal reception sound, a message reception sound, etc.). The audio output module 152 may include a receiver, a speaker, a buzzer, or other sound generating device.

The alarm unit 153 (or other type of user notification means) may provide outputs to inform about the occurrence of an event of the mobile terminal 100. Typical events may include call reception, message reception, key signal inputs, a touch input etc. In addition to audio or video outputs, the alarm unit 153 may provide outputs in a different manner to inform about the occurrence of an event. For example, the alarm unit 153 may provide an output in the form of vibrations (or other tactile or sensible outputs). When a call, a message, or some other incoming communication is received, the alarm unit 153 may provide tactile outputs (i.e., vibrations) to inform the user thereof. By providing such tactile outputs, the user can recognize the occurrence of various events even if his mobile phone is in the user's pocket. Outputs informing about the occurrence of an event may be also provided via the display unit 151 or the audio output module 152. The display unit 151 and the audio output module 152 may be classified as a part of the alarm unit 153.

The haptic module 154 generates various tactile effects the user may feel. A typical example of the tactile effects generated by the haptic module 154 is vibration. The strength and pattern of the haptic module 154 can be controlled. For example, different vibrations may be combined to be outputted or sequentially outputted.

Besides vibration, the haptic module 154 may generate various other tactile effects such as an effect by stimulation such as a pin arrangement vertically moving with respect to a contact skin, a spray force or suction force of air through a jet orifice or a suction opening, a contact on the skin, a contact of an electrode, electrostatic force, and the like, an effect by reproducing the sense of cold and warmth using an element that can absorb or generate heat.

The haptic module 154 may be implemented to allow the user to feel a tactile effect through a muscle sensation such as fingers or arm of the user, as well as transferring the tactile effect through a direct contact. Two or more haptic modules 154 may be provided according to the configuration of the mobile terminal 100.

The memory 160 may store software programs used for the processing and controlling operations performed by the controller 180, or may temporarily store data (e.g., a phonebook, messages, still images, video, etc.) that are inputted or outputted. In addition, the memory 160 may store data regarding various patterns of vibrations and audio signals outputted when a touch is inputted to the touch screen.

The memory 160 may include at least one type of storage medium including a Flash memory, a hard disk, a multimedia card micro type, a card-type memory (e.g., SD or XD memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 160 over the Internet.

The interface unit 170 serves as an interface with every external device connected with the mobile terminal 100. For example, the external devices may transmit data to an external device, receives and transmits power to each element of the mobile terminal 100, or transmits internal data of the mobile terminal 100 to an external device. For example, the interface unit 170 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating the authority of person using the mobile terminal 100 and may include a user identity module (UIM), a subscriber identity module (SIM), a universal subscriber identity module (USIM), and the like. In addition, the device having the identification module (hereinafter referred to as 'identifying device') may take the form of a smart card. Accordingly, the identifying device may be connected with the terminal 100 via a port.

When the mobile terminal 100 is connected with an external cradle, the interface unit 170 may serve as a passage to allow power from the cradle to be supplied therethrough to the mobile terminal 100 or may serve as a passage to allow various command signals inputted by the user from the cradle to be transferred to the mobile terminal therethrough. Various command signals or power inputted from the cradle may operate as signals for recognizing that the mobile terminal is properly mounted on the cradle.

The controller 180 typically controls the general operations of the mobile terminal 100. For example, the controller 180 performs controlling and processing associated with voice calls, data communications, video calls, and the like. The controller 180 may include a multimedia module 181 for reproducing multimedia data. The multimedia module 181 may be configured within the controller 180 or may be configured to be separated from the controller 180. The controller 180 may perform a pattern recognition processing to recognize a handwriting input or a picture drawing input performed on the touch screen as characters or images, respectively.

The power supply unit 190 receives external power or internal power and supplies appropriate power required for operating respective elements and components under the control of the controller 180.

Various embodiments described herein may be implemented in a computer-readable or its similar medium using, for example, software, hardware, or any combination thereof.

For hardware implementation, the embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic units designed to perform the functions described herein. In some cases, such embodiments may be implemented by the controller 180 itself.

For software implementation, the embodiments such as procedures or functions described herein may be implemented by separate software modules. Each software module may perform one or more functions or operations described herein. Software codes can be implemented by a software application written in any suitable programming language. The software codes may be stored in the memory 160 and executed by the controller 180.

### Method for processing user input with respect to mobile terminal

The user input units 130 is manipulated to receive a command for controlling the operation of the mobile terminal 100 and may include a plurality of manipulation units 131 and 132. The manipulation units 131 and 132 may be generally referred to as a manipulating portion, and various methods and techniques can be employed for the manipulation portion so long as they can be operated by the user in a tactile manner.

The display unit 151 can display various types of visual information. These information may be displayed in the form of characters, numerals, symbols, graphic or icons. In order to input such information, at least one of the characters, numerals, symbols, graphic and icons may be displayed in predetermined arrangement in the form of a keypad. Also, the keypad can be referred to as a 'soft key'.

The display unit 151 may be operated as an entire area or may be divided into a plurality of regions so as to be operated. In the latter case, the plurality of regions may be configured to be operated in association with each other.

For example, an output window and an input window may be displayed at an upper portion and a lower portion of the display unit 151. The output window and the input window are regions allocated to output or input information, respectively. Soft keys marked by numbers for inputting a phone number or the like may be outputted to the input window. When a soft key is touched, a number or the like corresponding to the touched soft key may be displayed on the output window. When the manipulation unit is manipulated, a call connection to the phone number displayed on the output window may be attempted or text displayed on the output window may be inputted to an application.

The display unit 151 or a touch pad may be configured to receive a touch through scrolling. The user can move an entity displayed on the display unit 151, for example, a cursor or a pointer positioned on an icon or the like, by scrolling the touch pad. In addition, when the user moves his finger on the display unit 151 or on the touch pad, a path along which the user's finger moves may be visually displayed on the display unit 151. This can be useful in editing an image displayed on the display unit 151.

A certain function of the terminal may be executed when the display unit 151 (touch screen) and the touch pad are touched together within a certain time range. For example, the display unit 151 and the touch pad may be touched together when the user clamps the terminal body by using his thumb and index fingers. The certain function may be activation or deactivation of the display unit 151 or the touch pad.

Exemplary embodiments related to a control method that can be implemented in the terminal configured as described above will now be described with reference to the accompanying drawings. The exemplary embodiments to be described may be solely used or may be combined to be used. Also, the exemplary embodiments to be described may be combined with the foregoing user interface (UI) so as to be used.

First of all, concepts or terms needed for explanation of the embodiments of the present disclosure will be described.

### Three-dimensional (3D) stereoscopic image

Three-dimensional (3D) stereoscopic image is an image with which the user may feel a gradual depth and reality of a portion where an object is positioned on a monitor or a screen in the same way as a real space. The 3D stereoscopic image is implemented by using a binocular disparity. The binocular disparity refers to a parallax obtained by the positions of a user's two eyes away by about 65 millimeters from each other. When two eyes see mutually different 2D images, and when the images are transferred to the brain through a retina and merged, the user may feel the depth and reality of a 3D stereoscopic image.

The 3D display methods includes a stereoscopic method (glass method), an auto-stereoscopic method (glassless method), a projection method (holographic method), and the like. The stereoscopic method largely used for home television receivers includes a Wheatstone stereoscopic method, and the like. The auto-stereoscopic method largely used for mobile terminals or the like includes a parallax barrier method, a lenticular method, and the like. The projection method includes a reflective holographic method, a transmission type holographic method, and the like.

### Configuration and display of 3D stereoscopic image

In general, a 3D stereoscopic image includes a left image (left eye image) and a right image (right eye image). The method of configuring 3D stereoscopic image may be classified into a top-down scheme in which a left image and a right image are disposed up and down in one frame, an L-to-R (left-to-right, side by side) scheme in which a left image and a right image are disposed left and right in one frame, a checker board scheme in which left image fragments and right eye fragments are disposed in a tile form, an interlaced scheme in which a left image and a right image are alternately disposed by column or by row, a time division (time sequential, frame by frame) scheme in which a left eye image and a right eye image are alternately displayed by time, and the like.

### Configuration and display of 3D thumbnail image

In general, a thumbnail indicates a reduced image or a reduced still image.

A 3D thumbnail image may be generated by generating a left image thumbnail and a right image thumbnail from a left image and a right image of an original image frame, respectively, and unifying the left and right image thumbnails. The left and right image thumbnails may be displayed with a left-right distance difference on a screen as far as a depth corresponding to the disparity of the left and right images, thereby representing stereoscopic spatial impression.

As mentioned in the 3D displaying method, the left image thumbnail and the right image thumbnail are sequentially displayed on a screen with the left-right distance difference as far as the depth (for example, time sequential method), or displayed on defined regions on the screen (for example, top-down, checker board, interlaced, etc.), thereby displaying a 3D thumbnail image.

### 3D depth

A 3D depth, a 3D depth scaling or a 3D depth value refers to an indicator indicating the 3D distance between objects within an image. For example, when a depth scaling is defined as 256 levels so a maximum value is 255 and a minimum value is 0, a higher value represents a position closer to a viewer or a user.

In general, a 3D stereoscopic image including a left image and a right image captured through two camera lenses allows the viewer to feel the depth scaling due to the parallax between the left and right images generated by the foregoing binocular disparity. A multi-view image also allows the viewer to feel a depth scaling by using a plurality of images, each having a different parallax, captured by a plurality of camera lenses.

[Unlike the 3D stereoscopic image or the multi-view image, which is generated as an image having a depth scaling from the beginning, an image having a depth scaling may be generated from a 2D image. For example, a depth image-based rendering (DIBR) scheme is a method in which an image of a new point of view, which does not exist yet, is created by using one or more 2D images and a corresponding depth map. The depth map provides depth scaling information regarding each pixel in an image. An image producer may calculate the parallax of an object displayed on a 2D image by using the depth map and may shift or move the corresponding object to the left or right by the calculated parallax to generate an image of a new point of view.

The present exemplary embodiment can be applicable to a 2D image (an image, a graphic object, a partial screen image, and the like) as well as to the 3D stereoscopic image (an image, a graphic object, a partial screen image, and the like) which is generated as an image having a depth scaling from the beginning, For example, in the exemplary embodiment of the present disclosure, 3D information (i.e., a depth map) may be generated from a 2D image by using the known 3D image creation scheme, an image (i.e., a left image and a right image) of a new point of view may be generated by using the foregoing DIBR scheme or the like, and then the images may be combined to generate a 3D image.

In the following description, it is assumed that a depth scaling of 3D image is adjusted by the mobile terminal 100. However, the case of adjusting a 3D image by the mobile terminal 100 is merely for explaining an exemplary embodiment disclosed in this document and it should be understood that the technical idea of the disclosed exemplary embodiment of the present disclosure is not limited thereto.

Namely, when a depth scaling of a 2D image is to be adjusted by the mobile terminal 100, a 2D image can be displayed three-dimensionally through the process of generating the depth map or the 3D image as described above. Thus, in describing a '3D image' hereinafter, it should be construed that the 3D image means to include a '2D image' although the 2D image is not mentioned. Here, the 2D image may be a 2D graphic object, a 2D partial screen image, and the like.

### Method for Controlling Image Depth and Mobile Terminal using the same

The present disclosure proposes a method for enhancing a recognition level of a target displayed in a three-dimensional (3D) manner or providing a visually interesting effect by controlling depths of user interfaces or contents using 3D stereoscopic images, according to three-dimensionally displayed image, object, partial screen and the like, instead of displaying such user interfaces or contents by uniformly providing the same depth.

In detail, in the method for controlling the depth of the image according to one exemplary embodiment, when a 3D image (object, partial screen, etc.) is displayed in the original size, it may be provided with the original depth or a typical depth for a 3D image, and if being displayed in a reduced size more than its original size (e.g., a thumbnail size or the like), the depth of the 3D image may be reduced.

For example, in case where a maximum value is 255 and a minimum value is 0 under assumption that a depth has 256 levels defined, in the method of controlling the image depth according to the one exemplary embodiment, when a 3D image is displayed in its original size, the depth thereof may be controlled (adjusted) to 255, and when it is displayed in a smaller size than its original size, the depth thereof may be controlled (adjusted) to a smaller value than 255.

Also, in the method for controlling the image depth in accordance with the one exemplary embodiment, 3D contents such as photos, images, videos, broadcast and the like may be displayed with their original depths when the contents are displayed in their original image sizes, while being displayed with controlled depths, which are lower than their original depths, when being displayed in sizes of their thumbnail images. As a result, upon reproducing contents, a user can obtain a visual effect that a content displayed as a thumbnail image at a relatively far distance from a field of vision is reproduced and simultaneously an image size thereof is getting greater to be closer to the field of vision.

In the method for controlling the image depth in accordance with the one exemplary embodiment, a 3D graphic object (or user interface component), such as text, icon, button, figure, page and the like may be displayed with low depth when the 3D graphic object is small in size, whereas being displayed with high depth when it is large in size. As a result, a user can obtain a visual effect that the 3D graphic object is increased or enlarged in size to be controlled to have higher depth and accordingly the 3D graphic object is getting close to a field of vision.

In the method for controlling the image depth in accordance with the one exemplary embodiment, when a 3D partial screen, which is three-dimensionally displayed on a partial region of an entire screen is small in size, the 3D partial screen may be displayed with low depth, whereas being displayed by controlling the same to have high depth when the 3D partial screen is large in size.

Three-dimensional (3D) displaying on the partial region of the entire screen may be referred to as a partial three-dimensional displaying. For instance, a display panel is turned on or off according to a barrier unit, thereby allowing the three-dimensional displaying only on a part of a screen.

The method for controlling the image depth in accordance with the one exemplary embodiment may allow 3D image, 3D graphic object, 3D partial screen or the like, on which a pointer (or a cursor) is currently located, to be displayed with a higher depth level, or 3D image, 3D graphic object, 3D partial screen or the like, which is currently displayed on the foreground, to be displayed with a higher depth level, thereby performing a pointer (or cursor) function or more facilitating a user's perception.

An entire operation of the mobile terminal 100 according to the one exemplary embodiment will be described as follows. The controller 180 may identify a target to be three-dimensionally displayed on a screen, determine a size of the identified target, and decide depth of the target corresponding to the determined size. The display unit 151 may three-dimensionally display the target according to the decided depth.

Hereinafter, description will be given of operations of the mobile terminal 100 by dividing into a depth control of a 3D image, a depth control of a 3D graphic object, a depth control of a 3D partial screen, and a 3D cursor effect.

First of all, description will be given of a case where the mobile terminal 100 controls (adjust) depth of a 3D image and displays the depth-adjusted 3D image.

### Control of Depth of Three-Dimensional (3D) Image

The mobile terminal 100 according to the one exemplary embodiment may display a three-dimensional (3D) image with its original depth (level) when being displayed in its original size, while displaying the same by controlling (adjusting) the depth to be lower than its original one when being displayed in a smaller size (for example, a thumbnail image size) than the original size.

In detail, the controller 180 identifies a 3D image (or 2D image) to be three-dimensionally displayed on a screen. For example, the controller 180 may identify at least one of 3D images, which is currently displayed on a screen or is to be displayed on the screen, as a target to be displayed in the 3D manner. Alternatively, the controller 180 may identify a 3D image, on which a pointer or a cursor is present, as a target to be three-dimensionally displayed.

The controller 180 also may identify a 3D image present at a position where a touch input or a proximity touch is generated, as a target to be displayed in the 3D manner. Alternatively, the controller 180 may identify a 3D image preset on the foreground of a screen as a target to be displayed in the 3D manner.

The controller 180 may identify a 3D image selected by a user as a target to be displayed in the 3D manner. Alternatively, the controller 180 may identify a 3D image to be selectable by a user as a target to be displayed in the 3D manner.

### The controller 180 determines a size of the identified 3D image.

Here, the size may be a 2D pixel size. In detail, the size may be a 2D pixel size of one of left and right images configuring the 3D image. For instance, the 2D pixel size may be defined by multiplying the number of X-axis pixels and the number of Y-axis pixels of the left or right image.

The controller 180 decides a depth of the 3D image in correspondence with the determined size. Especially, the controller 180 may decide the value in proportion to the determined size as a depth of the 3D image.

Here, if the 3D image is displayed in a more reduced size than its original size, the controller 180 may decide a value, which is obtained by lowering an original depth for each pixel of the 3D image by the same numerical value, as a depth for each pixel of the 3D image.

That is, the controller 180 may uniformly lower a depth for each pixel, corresponding to the disparity between the left and right images of the 3D image. For example, the controller 180 may lower a depth of a pixel whose original depth is 150 down to 100, a depth of a pixel whose original depth is 100 down to 50, and a depth of a pixel whose original depth is 50 down to 0.

Alternatively, if the 3D image is displayed in a more reduced size than its original size, the controller 180 may decide a value, which is obtained by lowering an original depth for each pixel of the target image in proportion to the difference between the original size and the reduced size of the 3D image, as a depth for each pixel of the 3D image.

That is, the controller 180 may lower the depth by a ratio between the original image size of the left or right image and an image size thereof actually displayed on a screen. For example, assuming that the original image size of the left image is 800 x 600 and its original depth is 200, if the thumbnail image size displayed on a screen is 100 x 75, the controller 180 may lower a depth of the thumbnail image down to 25 corresponding to one-eighth of its original depth.

Alternatively, if the 3D image is displayed in a more reduced size than its original size, the controller 180 may decide a depth for each pixel of the 3D image in a direction (manner) to narrow (restrict) the fluctuation (up-and-down) distribution of depth for each pixel of the 3D image.

That is, the controller 180 may decide a depth of each pixel in a manner of proportionally narrowing (limiting, restricting) the distribution of depths on a depth map (i.e., in a manner of restricting the up-and-down distribution of depths). For example, the controller 180 may adjust a depth of a pixel whose original depth is 150 down to 130, a depth of a pixel whose original depth is 130 down to 120, a depth of a pixel whose original depth is 110 unchangeably to 110, a depth of a pixel whose original depth is 90 up to 100, and a depth of a pixel whose original depth is 70 up to 90.

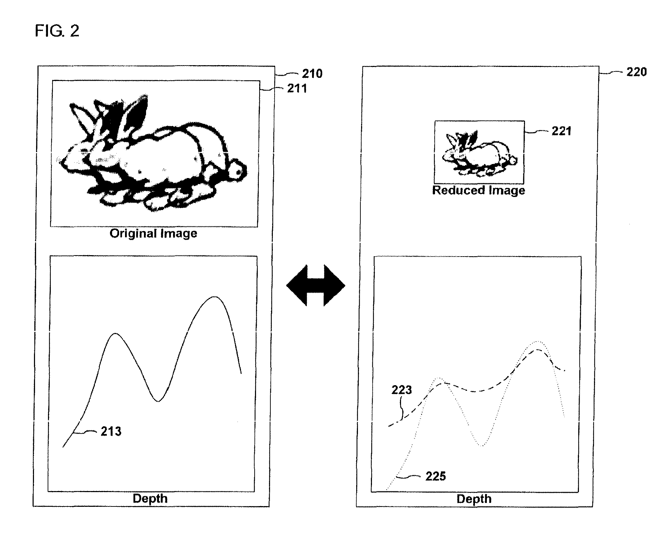

FIG. 2 is an exemplary view showing that the mobile terminal according to the one exemplary embodiment decides a depth for each pixel of a three-dimensional (3D) image in correspondence with a size of the 3D image. FIG. 2 shows a 3D image 211 in an original size and the corresponding depth 213 on a depth map, and a 3D image 221 in a reduced size and the corresponding depths 223, 225 on the depth map.

Comparing the depth 213 of the original 3D image with the depths 223, 225 of the reduced 3D image, the depth of the reduced 3D image may be adjusted in a manner of narrowing a fluctuation distribution of depths on a depth map (see 223), and also in a manner of uniformly lowering each of depths by the same numerical value (see 225).

The display unit 151 may display the 3D image according to the decided depth in a 3D manner. Meanwhile, the controller 180 may decide orientation, lighting, background, line color and the like in relation to the 3D image in correspondence with the determined size. In response to the operation of the controller 180, the display unit 151 may three-dimensionally display the 3D image according to the decided orientation, lighting, background, line color and the like as well as the decided depth.

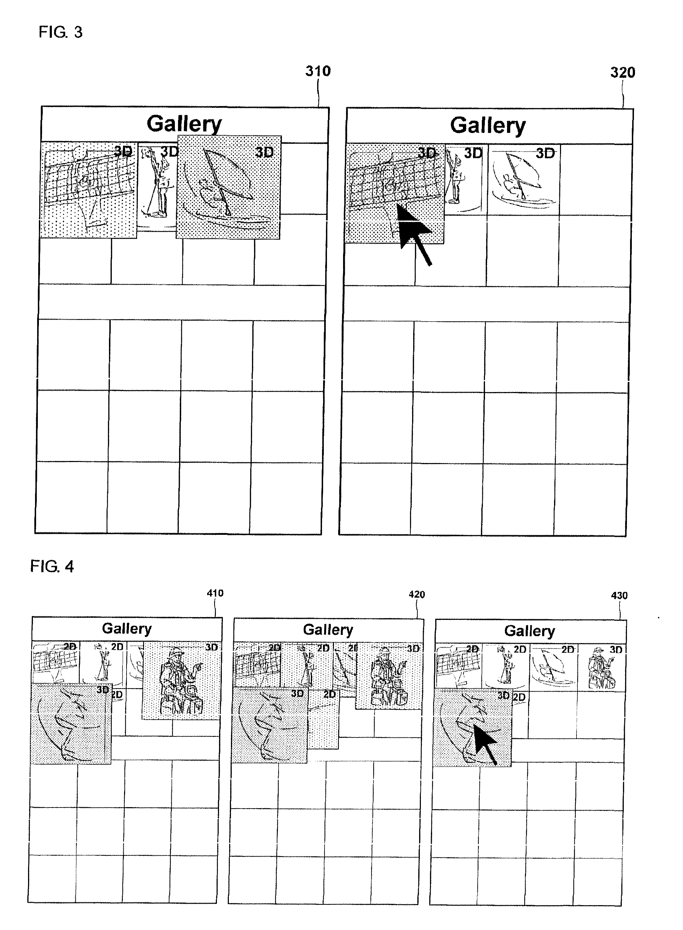

FIG. 3 is an exemplary view showing that the mobile terminal displays a three-dimensional (3D) image by controlling a depth thereof in a gallery menu including only the three-dimensional (3D) images.

As shown in FIG. 3, the mobile terminal 100 may display all of 3D thumbnail images ('3D' in FIG. 3)or part of the 3D images, included in an album or gallery including only the 3D thumbnail images, to have depth (see 310).

Here, the mobile terminal 100 may display all of 3D thumbnail images with the same depth, or display each thumbnail image with a different depth. For example, the mobile terminal 100 may display every 3D thumbnail image with a depth of 255, and alternatively, each 3D thumbnail image with a depth in the range of 150 to 200.

Alternatively, the mobile terminal 100 may display only a 3D thumbnail image, on which a pointer (or cursor) is currently positioned, with a depth (see 320). Here, the mobile terminal 100 may display the rest of 3D thumbnail images without depth like 2D thumbnail images (i.e., depth=0) or with a depth lower than their original depth.

FIG. 4 is an exemplary view showing that the mobile terminal according to the one exemplary embodiment displays each image in a gallery including 3D images and 2D images by adjusting depth thereof. As shown in FIG. 4, the mobile terminal may display only 3D thumbnail images included in an album or gallery, which includes both 3D thumbnail images ('3D' in FIG. 4) and 2D thumbnail images ('2D' in FIG. 4), with depth.

Alternatively, the mobile terminal 100 may provide depth to a 2D thumbnail image so as to be three-dimensionally displayed with depth the same as or lower than that of a 3D thumbnail image (see 420). Also, the mobile terminal 100 may display a 3D thumbnail image or 2D thumbnail image only, on which a pointer (or cursor) is present, with depth (see 430).

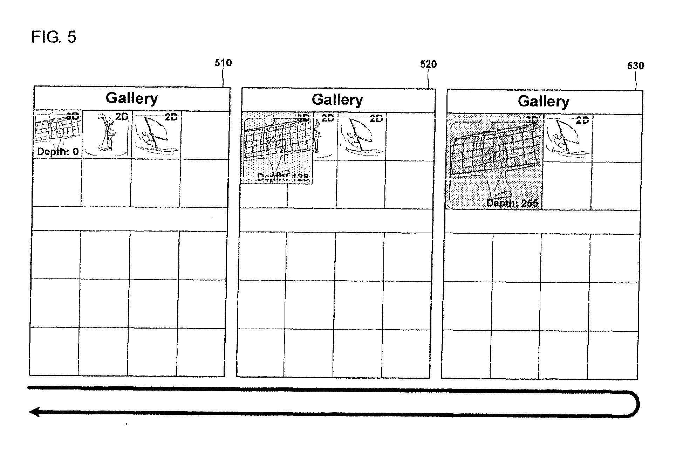

FIG. 5 is an exemplary view showing that the mobile terminal according to the one exemplary embodiment displays a 3D or 2D image by adjusting its depth according to a size variation thereof. As shown in FIG. 5, as a 3D or 2D thumbnail image is enlarged, the mobile terminal 100 may three-dimensionally display such image with increasing its depth sequentially to 0, 128 and 255 in proportion to the enlargement ratio. Then, as the 3D or 2D thumbnail image is reduced, the mobile terminal 100 may three-dimensionally display such image with decreasing its depth sequentially down to 255, 128 and 0 in proportion to the reduction ratio (see 510, 520 and 530).

Consequently, as the thumbnail image is increased in size, a visual effect that the thumbnail image moves close to a user sight from a far distance can be generated.

Hereinafter, description will be given of a case where the mobile terminal 100 displays a 3D graphic object by adjusting (controlling) depth thereof.

### Control of Depth of Three-Dimensional (3D) Graphic Object

The mobile terminal 100 according to the one exemplary embodiment may display a 3D graphic object (or 3D user interface component) with its original depth when it is displayed in the original size, or by adjusting depth to be lower than its original depth when it is displayed in a more reduced size that the original size.

3D graphic objects (or 3D user interface components) may include texts, icons, figures and the like which are indicated (displayed) on various screens, such as an idle screen, a call-originating screen, a call-connecting screen, an ongoing call screen, a messaging screen, a phonebook screen, a call history screen and the like, or menus.

Especially, the controller 180 may identify a 3D graphic object (or 2D graphic object) to be three-dimensionally displayed on a screen, and then determine a size of the identified 3D graphic object.

The controller 180 decides depth of the 3D graphic object corresponding to the determined size. Especially, the controller 180 may decide the depth of the 3D graphic object as a value proportional to the determined size.

The display unit 151 may accordingly display the 3D graphic object in a 3D manner according to the decided depth. In the meantime, the controller 180 may decide origination, lighting, background, line color and the like of the 3D graphic object in correspondence with the determined size. In response to the operation of the controller 180, the display unit 151 may display the 3D graphic object in the 3D manner according to the decided origination, lighting, background, line color and the like as well as the decided depth.

As such, the mobile terminal 100 can adjust the depth, the origination, the light, the background, the line color and the like of the 3D graphic object to make the 3D graphic object recognized close or far. That is, the mobile terminal 100 may control the 3D graphic object to have higher depth responsive to increase in the enlargement ratio or size of the 3D graphic object.

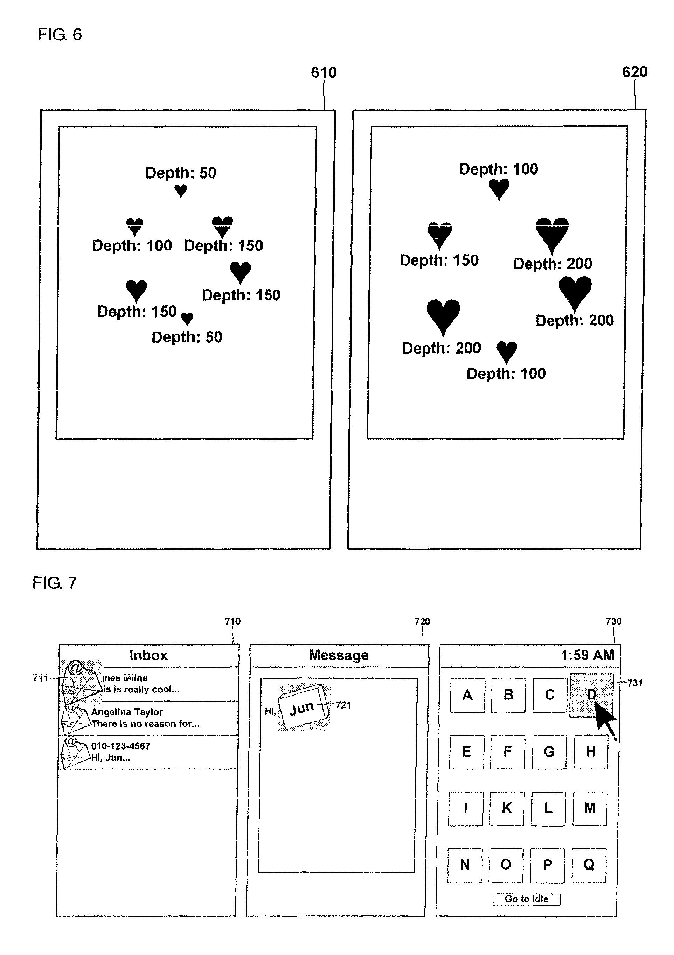

FIG. 6 is a first exemplary view showing that the mobile terminal according to the one exemplary embodiment displays each 3D graphic object by adjusting depth of the 3D graphic object according to a size thereof.

As shown in FIG. 6, the mobile terminal 100 initially displays heart figures as 3D graphic objects in a 3D manner with depths in the range of 50 to 150 according to sizes of the figures (see 610). Then, when the sizes of the heart figures increase, the mobile terminal 100 may display the figures in the 3D manner by increasing the depths in the range of 100 to 200 (see 620).

FIG. 7 is a second exemplary view showing that the mobile terminal according to the one exemplary embodiment displays each 3D graphic image by adjusting depth of the 3D graphic object according to a size thereof.

As shown in FIG. 7, if a size or enlargement/reduction ratio of a mail icon 711 as a 3D graphic object, displayed on an inbox screen, is changed, the mobile terminal 100 may display the mail icon 711 by adjusting depth thereof in response to the change (see 710).

Alternatively, if part of contents of a message shown on a messaging screen is displayed in the form of a 3D box 721, the mobile terminal 100 may display the 3D box 721 by adjusting depth thereof according to a size or enlargement/reduction ratio of the 3D box 721 (see 720).

Also, the mobile terminal 100 may display a menu icon 731 as a 3D graphic object, on which a pointer (or cursor) is currently present, by adjusting depth thereof according to a size or enlargement/reduction ratio of the menu icon 731 (see 730). Here, the mobile terminal 100 may display the other icons without depth (i.e., in a 2D manner), or with lower depth.

The processes of identifying by the controller 180 the 3D graphic object (or 2D graphic object) to be displayed on a screen in a 3D manner, determining by the controller 180 the size of the identified 3D graphic object, deciding by the controller 180 depth of the 3D graphic object corresponding to the determined size, and three-dimensionally displaying by the display unit 151 the 3D graphic object according to the decided depth will be understood similarly as described with reference to FIGS. 1 to 5, so a detail description thereof will not be repeated.

Hereinafter, description will be given of a case where the mobile terminal 100 displays a 3D partial screen by adjusting (controlling) depth thereof.

### Control of Depth of Three-dimensional (3D) partial Screen

The mobile terminal 100 according to the one exemplary embodiment may display 3D contents with original depth when the 3D contents are displayed on an entire screen, while displaying the same by adjusting the depth lower than the original depth when being displayed on a partial screen. Especially, the mobile terminal 100 may display the 3D partial screen with lower depth when the size of the 3D partial screen three-dimensionally displayed only on a partial region of a screen is small in size, and display the same with higher depth when being large in size.

In detail, the controller 180 identifies a 3D partial screen (or 2D partial screen) to be displayed on a screen in the 3D manner, and then determines a size of the identified 3D partial screen.

The controller 180 decides depth of the 3D partial screen corresponding to the determined size. Particularly, the controller 180 may decide the depth of the 3D partial screen as a value proportional to the determined size.

For instance, if a 3D widget is partially displayed in the 3D manner, the controller 180 may adjust depth of the 3D widget according to the size of the 3D partial screen displaying the 3D Widget thereon. For example, the controller 180 may decide the depth of 20 for the 3D widget when the 3D widget is displayed in 100 x 100 size (for example, a widget icon displayed state), and the depth of 100 therefor when the 3D widget is displayed in 500 x 500 size after activation.

The controller 180 may adjust the depth of a 3D album according to a size of a 3D partial screen displaying photos or video thereon when the 3D album is partially displayed in the 3D manner. Alternatively, the controller 180 may adjust the depth of a 3D TV video according to a size of a 3D partial screen displaying the 3D TV video thereon when the 3D TV video is partially displayed in the 3D manner.

Also, the controller 180 may adjust the depth of a 3D graphic object according to a size of a 3D partial screen displaying the 3D graphic object thereon when the 3D graphic object is partially displayed in the 3D manner.

Here, the 3D graphic objects (or 3D user interface components) may include texts, icons, figures and the like which are indicated on various screens, such as an idle screen, a call-originating screen, a call-connecting screen, an ongoing call screen, a messaging screen, a phonebook screen, a call history screen and the like, or menus.

For example, the 3D graphic objects may include photos displayed on a phonebook, user interface components on a call-receiving screen, user interface components included in a message-receiving screen to generate a 3D effect, album skins, track skins, cover art images and the like upon music reproduction, and the like. The display unit 151 may display the 3D partial screen according to the decided depth in the 3D manner.

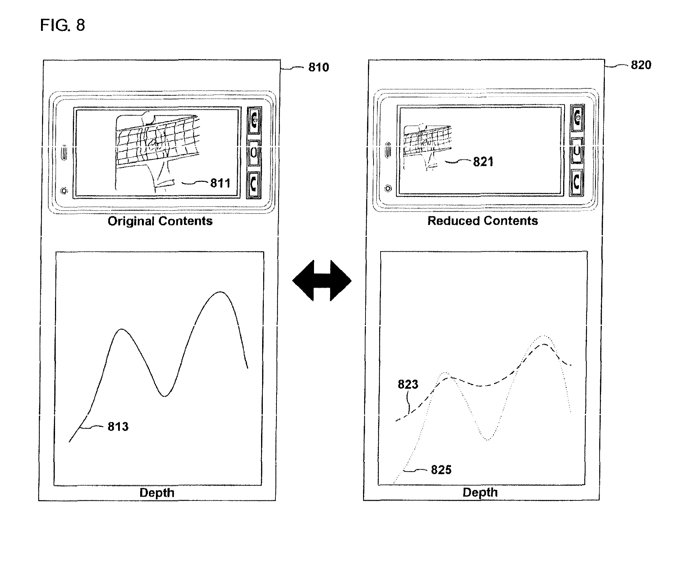

FIG. 8 is an exemplary view showing that the mobile terminal according to the one exemplary embodiment decides depth for each pixel of a 3D partial screen in correspondence with a size of the 3D partial screen. FIG. 8 shows a 3D partial screen 811 in an original size and its corresponding depth 813 on a depth map (see 810). FIG. 8 also shows a 3D partial screen 821 in a reduced size and its corresponding depths 823, 825 on a depth map.

Comparing the depth 813 of the original sized 3D partial screen with the depths 823, 825 of the size-reduced 3D partial screen, the depth of the size-reduced 3D partial screen may be adjusted in a manner of narrowing (restricting) a fluctuation distribution of depths on the depth map (see 823), or in a manner of uniformly reducing the depths by the same numerical value (see 825).

The processes of identifying by the controller 180 a 3D partial screen (or 2D partial screen) to be displayed on a screen in the 3D manner, determining by the controller 180 a size of the identified 3D partial screen, deciding by the controller 180 depth of the 3D partial screen corresponding to the determined size, and displaying by the display unit 151 the 3D partial screen in the 3D manner according to the decided depth will be understood similarly as described with reference to FIGS. 1 to 7, so a detailed description thereof will not be repeated.

Hereinafter, description will be given of a case where the mobile terminal 100 displays a 3D cursor effect.

### Three-dimensional (3D) Cursor Effect

The mobile terminal 100 according to the one exemplary embodiment may display 3D image, 3D graphic object, 3D partial screen and the like, on which a pointer (or cursor) is present, with depth (i.e., in a 3D manner), or display 3D image, 3D graphic object, 3D partial screen and the like, which are currently displayed on the foreground, with depth (i.e., in a 3D manner).

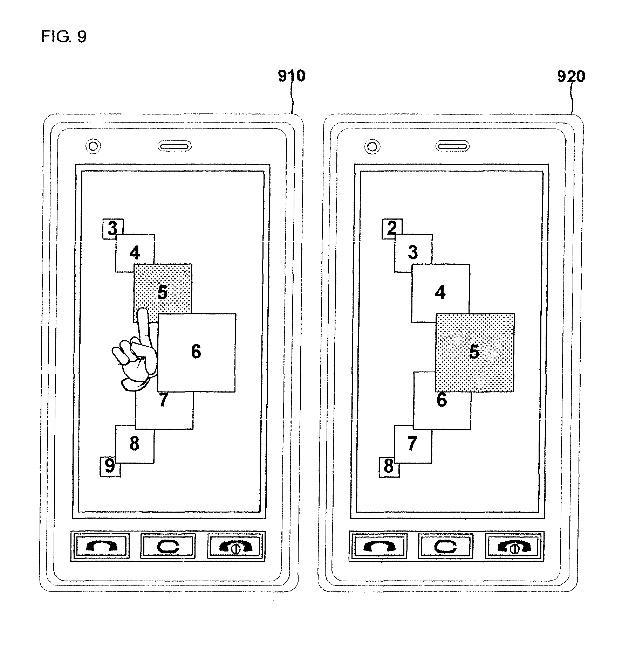

FIG. 9 is an exemplary view showing that the mobile terminal according to the one exemplary embodiment displays a 3D graphic object, having a pointer or cursor present thereon or displayed on the foreground, with depth. As shown in FIG. 9, the mobile terminal 100 may display a 3D graphic object, on which a pointer or cursor is present, with higher depth (see 910), or display a 3D graphic object, which is displayed on the foreground, with higher depth (see 920).

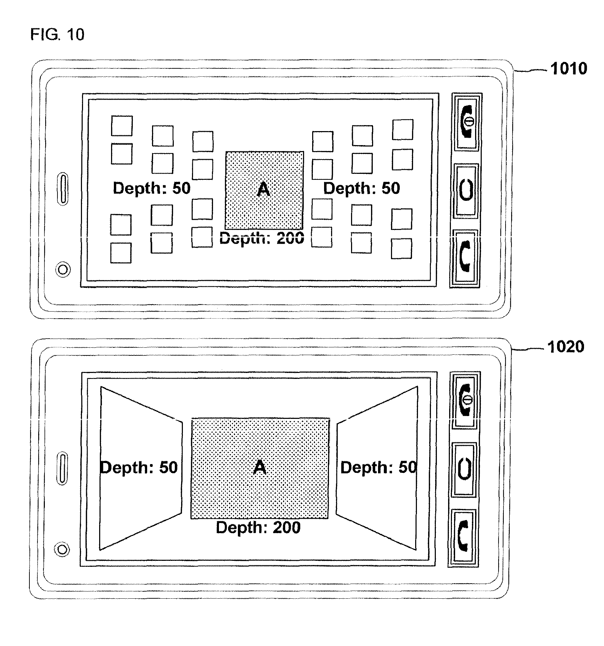

FIG. 10 is an exemplary view showing that the mobile terminal according to the one exemplary view displays a 3D image displayed on the foreground with depth. As shown in FIG. 10, the mobile terminal 100 may display a 3D image or 3D video, which is displayed on the foreground of an album screen, a phonebook screen, a function menu screen, a music cover art screen, a gallery screen and the like, with higher depth (1010, 1020).

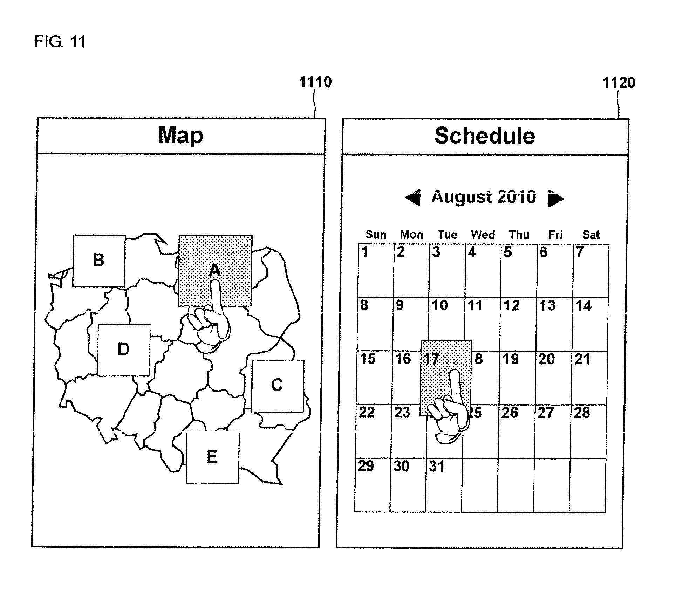

FIG. 11 is an exemplary view showing that the mobile terminal according to the one exemplary embodiment displays a 3D graphic object, which is present at a position where a user's real touch or proximity touch is generated, with depth. As shown in FIG. 11, the mobile terminal 100 may display a 3D graphic object, which is present at a position where a user's touch input or proximity touch is received on a map screen, with higher depth (see 1110), or display a 3D graphic object, present at a position where a user's touch input or proximity touch is received on a calendar or schedule screen, with higher depth (see 1120)

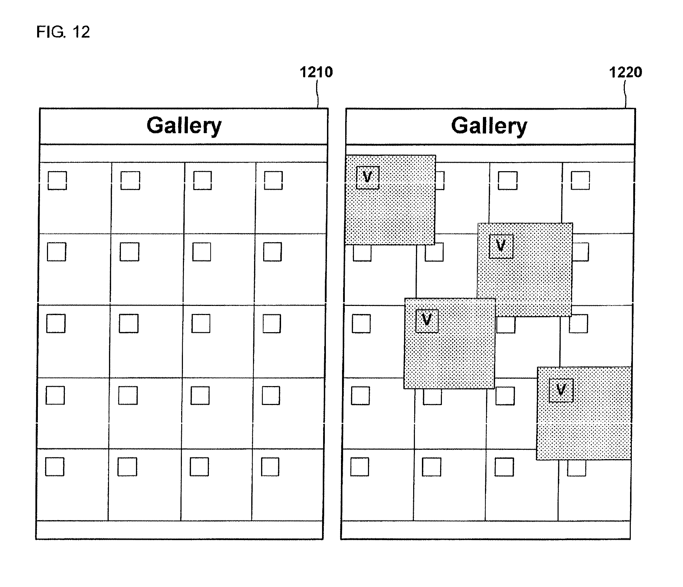

FIG. 12 is an exemplary view showing that the mobile terminal according to the one exemplary embodiment displays a 3D graphic object selected by a user with depth. As shown in FIG. 12, the mobile terminal 100 may display a 3D graphic object, selected by a user from at least one 3D graphic object, with depth (1210, 1220). For example, if a user selects plural 3D graphic objects for the purpose of copy, move, delete and the like, the mobile terminal 100 may three-dimensionally display only the selected 3D graphic objects with higher depth.

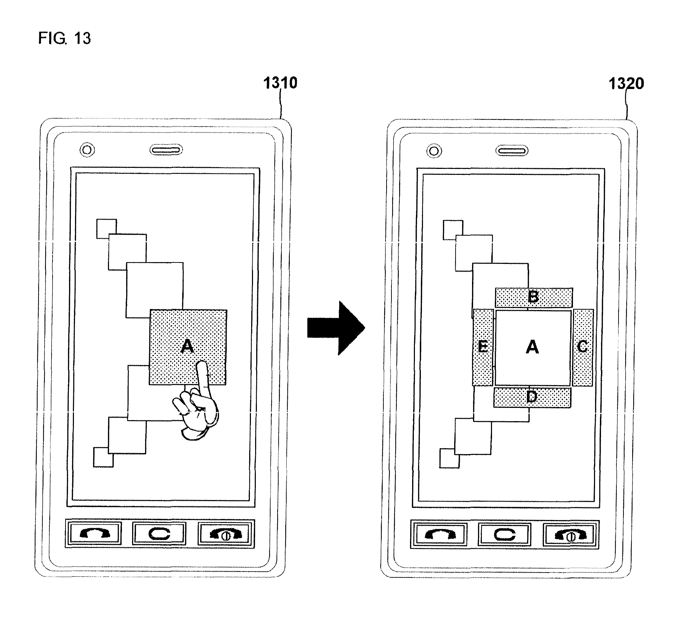

FIG. 13 is an exemplary view showing that the mobile terminal according to the one exemplary embodiment displays 3D user interface components selectable by a user with depth. As shown in FIG. 13, if a user touches a user interface component A, the mobile terminal 100 may display user interface components B, C, D and E selectable by the user in associated with the user interface component A with higher depth (1320). For example, the user interface components B, C, D, E may indicate function menus executable for a target indicated by the user interface component A. The mobile terminal 100 may control the other user interface component not to be selected until one of the user interface components B, C, D, E is selected or a current screen is not back to the previous screen due to cancellation of the selection of the user interface component A.

Besides the examples shown in FIGS. 9 to 13, the mobile terminal 100 may also three-dimensionally display a photo or a video displayed having a pointer present thereon or displayed on the foreground in an idle screen, with higher depth. Alternatively, the mobile terminal 100 may three-dimensionally display contact information having a pointer present thereon or displayed on the foreground, among contact information in a contact list, with higher depth.

The mobile terminal 100 may three-dimensionally display a menu item, included in a function menu list, having a pointer present thereon or displayed on the foreground, with higher depth. Alternatively, the mobile terminal 100 may three-dimensionally display an album cover art, included in an album list of a music reproduction application, having a pointer present thereon or displayed on the foreground, with higher depth.

The mobile terminal 100 may three-dimensionally display a photo or image having a pointer present thereon or displayed on the foreground, on a photo album screen or a face view screen, with higher depth. Alternatively, the mobile terminal 100 may three-dimensionally display a video having a pointer present thereon or displayed on the foreground, on a video album screen, with higher depth.

The mobile terminal 100 may three-dimensionally display an internet browser screen, having a pointer present thereon or displayed on the foreground, among a plurality of internet browser screens, with higher depth.

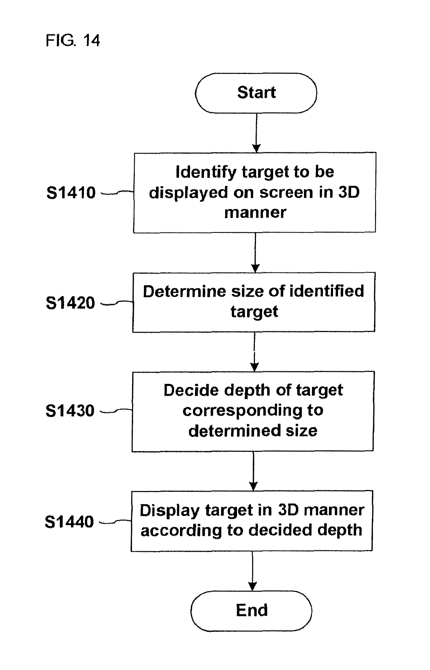

FIG. 14 is a flowchart showing a method for controlling a depth of an image in accordance with one exemplary embodiment. Referring to FIG. 14, the mobile terminal 100 identifies a target (object) to be displayed on a screen in the 3D manner (S1410). The target may be 3D image, 3D graphic object or 3D partial screen. Alternatively, the target may be 2D image, 2D graphic object or 2D partial screen. For example, the mobile terminal may identify, as a target to be displayed, at least one of 3D image and 2D image, a target on which a pointer or cursor is present, a target on which a touch input or a proximity touch input is received, a target displayed on the foreground of the screen, a target selected by a user or a target selectable by the user.

The mobile terminal 100 then determines a size of the identified target (S1420). Here, the size may be a 2D pixel size. For example, the size may a 2D pixel size of one of left and right images configuring 3D image, 3D graphic object or 3D partial screen. The mobile terminal 100 decides a depth of the target corresponding to the determined size (S1430). Especially, the mobile terminal 100 may decide the depth of the target as a value proportional to the determined size. Here, when the target is displayed in a reduced size more than its original size, the mobile terminal 100 may decide a value, obtained by lowering an original depth for each pixel of the target by the same numerical value, as the depth for each pixel of the target.

Alternatively, when the target is displayed in a reduced size more than its original size, the mobile terminal 100 may decide a value, obtained by lowering an original depth for each pixel of the target in proportion to the difference between the original size and the reduced size of the target, as the depth for each pixel of the target.

Also, when the target is displayed in a reduced size more than its original size, the mobile terminal 100 may decide a depth for each pixel of the target in a manner of narrowing (restricting) a fluctuation distribution of the depth for each pixel of the target.

The mobile terminal 100 then three-dimensionally display the target in the 3D manner according to the decided depth (S1440). Meanwhile, the mobile terminal 100 may decide orientation, lighting, background, line color and the like in relation to the target in correspondence with the determined size. The mobile terminal 100 may then display the target in the 3D manner according to at least one of the decided orientation, lighting, background, line color and the like.

The aforesaid method for controlling depth of an image in accordance with one exemplary embodiment may be understood similarly as described in relation to the mobile terminal according to the one exemplary embodiment with reference to FIGS. 1 to 13, so a detailed description thereof will not be repeated.

The aforesaid method according to the one exemplary embodiment can be implemented in a medium having a program recorded as computer-readable codes. Examples of such computer-readable media may include ROM, RAM, CD-ROM, magnetic tape, floppy disk, optical data storage element and the like. Also, such computer-readable medium may be implemented in a type of a carrier wave (e.g., a transmission via an Internet). The computer can include the controller 180 of the mobile terminal.

The aforesaid mobile terminal may not be limited to the configurations and methods according to the foregoing descriptions, but part or all of the exemplary embodiments may be selectively combined so as to allow various variations or modifications.

The exemplary embodiments have been described with reference to the accompanying drawings. Here, terms or words used in the specification and claims should not be interpreted in typical or lexical meaning, but be construed in meaning and concept matching with the technical scope of the present disclosure.

Hence, the foregoing embodiments and advantages are merely exemplary and are not to be construed as limiting the present disclosure. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims

## Claims

1. A method for controlling a mobile terminal, the method comprising:
identifying a target to be displayed in a three-dimensional manner on a display of the mobile terminal;
determining, via a controller of the mobile terminal, a size of the identified target;
calculating, via the controller, a depth of the target in correspondence with the determined size; and
displaying the target in the three-dimensional manner according to the calculated depth on the display.

2. The method of claim 1, wherein the target comprises a three-dimensional image, a three-dimensional graphic object or a three-dimensional partial screen.

3. The method of claim 2, wherein the size is a two-dimensional pixel size of one of left and right images configuring the three-dimensional image, the three-dimensional graphic object or the three-dimensional partial screen.

4. The method of claim 2, further comprising:
calculating a value obtained by lowering an original depth for each pixel of the target by a same numerical value as the depth for each pixel of the target if the target is displayed in a size reduced from an original size.

5. The method of claim 2, further comprising:
calculating a value obtained by lowering an original depth for each pixel of the target in proportion to a difference between an original size and a reduced size of the target as the depth for each pixel of the target if the target is displayed in a size reduced from the original size thereof.

6. The method of claim 2, wherein at the decision of the depth of the target, the depth for each pixel of the target is calculated in a manner of restricting a fluctuation distribution of depth for each pixel of the target is displayed in a size reduced from an original size.

7. The method of claim 1, wherein the target comprises a two-dimensional image, a two-dimensional graphic object or a two-dimensional partial screen.

8. The method of claim 1, wherein the size is a two-dimensional pixel size.

9. The method of any one of claims 1 to 8, further comprising:
calculating the depth of the target as a value in proportion to the determined size.

10. A mobile terminal comprising:
a controller (180) configured to identify a target to be displayed on a screen in a three-dimensional manner, to determine a size of the identified target, and to calculate a depth of the target in correspondence with the determined size; and
a display unit (151) configured to display the target in the three-dimensional manner according to the calculated depth.

11. The terminal of claim 10, wherein the target comprises a three-dimensional image, a three-dimensional graphic object or a three-dimensional partial screen, or
wherein the target comprises a two-dimensional image, a two-dimensional graphic object or a two-dimensional partial screen.

12. The terminal of claim 10 or 11, wherein the controller is further configured to identify a target on which a pointer or cursor is present as the target to be displayed.

13. The terminal of any one of claims 10 to 12, wherein the controller is further configured to identify a target on which a touch input or a proximity touch input is received as the target to be displayed.

14. The terminal of any one of claims 10 to 13, wherein the controller is further configured to identify a target displayed on the foreground of a screen as the target to be displayed.

15. The terminal of any one claim 10, wherein the controller is further configured to identify a target selected by a user as the target to be displayed.
